(19) Europäisches Patentamt
European Patent Office
Office européen des brevets

(11) EP 1 576 078 B1

(12) EUROPÄISCHE PATENTSCHRIFT

(45) Veröffentlichungstag und Bekanntmachung des Hinweises auf die Patenterteilung:
**25.04.2007 Patentblatt 2007/17**

(21) Anmeldenummer: **03714685.9**

(22) Anmeldetag: **06.03.2003**

(51) Int Cl.:
***C11C 3/10*** *(2006.01)* ***C10L 1/02*** *(2006.01)*

(86) Internationale Anmeldenummer:
**PCT/DE2003/000725**

(87) Internationale Veröffentlichungsnummer:
**WO 2003/076558 (18.09.2003 Gazette 2003/38)**

(54) **VERFAHREN ZUR KONTINUIERLICHEN HERSTELLUNG VON BIOMETHANOLDIESEL**

METHOD FOR THE CONTINUOUS PRODUCTION OF BIOMETHANOL DIESEL

PROCEDE DE PRODUCTION CONTINUE DE DIESEL A BASE DE BIOMETHANOL

(84) Benannte Vertragsstaaten:
**AT BE BG CH CY CZ DE DK EE ES FI FR GB GR HU IE IT LI LU MC NL PT RO SE SI SK TR**

(30) Priorität: **09.03.2002 DE 10210432**

(43) Veröffentlichungstag der Anmeldung:
**21.09.2005 Patentblatt 2005/38**

(73) Patentinhaber: **Dracowo Forschungs- und Enwicklungs Gmbh**
**06766 Wolfen (DE)**

(72) Erfinder: **ADLER, Bernhard**
**06132 Halle (DE)**

(74) Vertreter: **Herzog, Günter et al**
**Schuster & Partner,**
**Wiederholdstrasse 10**
**70174 Stuttgart (DE)**

(56) Entgegenhaltungen:
**WO-A-02/46339**
**DE-A- 3 501 761**
**DE-A- 3 932 514**
**DE-A- 10 043 644**
**DE-A- 19 925 871**
**DE-C- 19 721 474**

- **B. FREEDMAN ET AL.: "Variables affecting the yields of fatty esters from transesterified vegetable oils" JOURNAL OF THE AMERICAN OIL CHEMISTS' SOCIETY., Bd. 61, Nr. 10, 1982, Seiten 1638-1643, XP002252409 AMERICAN OIL CHEMISTS' SOCIETY. CHAMPAIGN., US ISSN: 0003-021X**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 576 078 B1

**Beschreibung**

Stand der Technik

Die Erfindung betrifft ein Verfahren zur kontinuierlichen Herstellung von Biomethanoldiesel in kleineren Mengen, beispielsweise für die dezentrale Verarbeitung von Ölmengen mit einem Produktionsvolumen zwischen 0,05 und 1 kt/a.

Bekannt ist, dass Biodiesel durch Umesterung von nativen Glycidestern mit Methanol unter Einsatz von Katalysatoren, meist KOH oder NaOH, gewonnen wird (B. Gutsche: Technologie der Methylesterherstellung, Fett/Lipid (1997, 418 - 427). In Europa wird hierzu vorwiegend Rapsöl als nachwachsender Rohstoff verwendet. Dabei kommen sowohl Batch-Verfahren, d. h. Umesterung von Rapsöl zu Diesel-Alternativtreibstoff (Firmenschrift Vogel&Noot, 1990), Semi-Batch-Verfahren (E. Ahn et al.: A low-waste process for the production of biodiesel, Sep. Sci. Techn. 1995, 2021 - 2033 und EP 0 356 317) als auch Mikroreaktorverfahren zur Anwendung. Hierzu wird von Assmann ein kontinuierliches Verfahren zum Herstellen niederer Alkylester beschrieben, bei dem Mikroreaktoren in Kombination mit Rohrreaktoren für die Umesterung eingesetzt werden müssen (DE 39 32 514 A1). Ohne die Verfahrensstufe der Nachreaktion in Rohrreaktoren kommt ein Verfahren zur kontinuierlichen Herstellung von Biomethanol- oder Bioethanoldiesel aus, bei dem wasserfreie Katalysatoren und wesentlich geringere Reynoldszahlen im Bereich $1300 \leq RE \leq 1500$ angewendet werden (DE 100 43 644.7).

DE 35 01 761 A (HENKEL) beschreibt eine Entsäuerung des Öls durch Veresterung der freien Fettsäuren mit einem niederen Alkohol in Gegenwart von Veresterungskatalysatoren (Kationentauscherharzen).

Allen genannten Verfahren ist gemein, dass die Umesterung als mehrstufiger Prozess entweder drucklos oder bis max. 62 bar betrieben wird und den Umesterungsstufen eine Methanolabtrennung sowie Waschprozesse zur Reduzierung des Kaliumgehaltes im Hauptprodukt Biodiesel bzw. in der Glycerinphase unter Gewinnung von Natrium- oder Kaliumhydrogenphosphat bzw. Natrium- oder Kaliumphosphat nachgeschaltet sind. Bei diesen Waschstufen fällt in Abhängigkeit der Säurezahl des eingesetzten Rapsöls bis zu 2% Seifenstock, ein Gemisch aus Biodiesel und der Kalium- bzw. Natriumseife, als Abprodukt an. Damit verbunden tritt ein unerwünschter Produktverlust auf. Darüber hinaus wirkt gerade die Seifenstockbildung der Phasentrennung zwischen der Biodieselphase und der Glycerinphase entgegen und erfordert zusätzlichen technischen Aufwand zur Phasentrennung. Des weiteren gehen bei den o g. Verfahren alle wertvollen Ingredenzien der Ölpflanze, wie z. B. die Tocopherole, verloren, die anderweitig eine sinnvolle Verwertung erfahren könnten.

Bekannt ist ferner, dass Biodieselanlagen mit einem Produktionsvolumen von 2 bis 300 kt/a derzeit mit herkömmlicher Apparatetechnik produzieren. Dabei ist das zu investierende Apparatevolumen dem geplanten Produktionsvolumen proportional. Dieses Produktionsvolumen ist aus apparatetechnischen wie auch wirtschaftlichen Gründen nicht beliebig veränderbar. Anlagen im unteren Bereich, d. h. mit einem Produktionsvolumen von 2 bis 5 kt/a werden aus betriebswirtschaftlichen Gründen mit nicht mehr als zwei Arbeitskräften betrieben. Noch kleinere Anlagen arbeiten auf der Basis herkömmlicher Verfahrenstechnik demzufolge unsubventioniert unrentabel. Andererseits erfordern Anlagen mit mehr als 50 kt/a mehr als 10% der Gesamtfläche im Umkreis von ca. 40 km um die Verarbeitungsstätte oder den Transport der Ölsaaten aus anderen Regionen und sind daher im Sinne einer ökologischen Landwirtschaft und Regionalentwicklung unakzeptabel.

Somit besteht die Aufgabe der Erfindung darin, ein kontinuierliches Verfahren zur Herstellung von Biomethanoldiesel zu entwickeln, das unabhängig vom Produktionsvolumen minimale Investitionen bei der Apparatetechnik erfordert, in Kleinstanlagen schon ab einem Produktionsvolumen von 0,05 kt/a wirtschaftlich durchführbar und einfach handhabbar ist. Außerdem sollen bei dem Prozess wertvolle Ingredenzien der eingesetzten Ölsaaten so abtrennbar sein, dass sie einer späteren Verwertung zugänglich gemacht werden können.

Die Erfindung und ihre Vorteile

Erfindungsgemäß wird die Aufgabe durch die Merkmale des ersten Patentanspruches gelöst. Die folgenden Ansprüche 2 bis 4 betreffen zweckmäßige Ausgestaltungen des Verfahrens.

Durch den Einsatz der Mikroreaktortechnik erfolgt eine Entkopplung zwischen dem installierten Apparatevolumen und dem geplanten Produktionsvolumen. Die hergestellte Menge Biodiesel ist bei Einsatz der Mikroreaktortechnik nur noch von der eingesetzten Durchflussleistung der Pumpen und den Betriebsstunden abhängig. Zum anderen wird eine bisher nicht praktizierte Verfahrenstechnologie vorgeschlagen. Nicht die Produkte Biodiesel und Rohglycerin werden Waschungen unterworfen, sondern das Rohprodukt Rapsöl wird vor der Umesterung einer Methanolwäsche unterzogen. Die technische Begründung für die erfindungsgemäße Umstellung der Verfahrensstufen ergibt sich aus folgendem Reaktionsablauf:

Hauptreaktion des Verfahrens:

$$Gl\,(OC{=}OR)_3 + 3\,CH_3OH \rightleftarrows 3\,CH_3OC{=}OR + Gl(OH)_3 \qquad \text{Gl. 1}$$

mit Gl = Glycidrest, R = Fettsäurerest

Die Menge der Phasen vermittelnden Stoffe zwischen der im Hauptprozess nach Gl. 1 sich bildenden hydrophoben Biodieselphase einerseits und hydrophilen Glycerinphase andererseits sollte minimal klein gehalten werden. Mit dieser Forderung minimiert man zugleich den Umfang von Nebenprodukten aus den unerwünschten Konkurrenzreaktionen gem. Gl. 2 - 4, bzw. Folgereaktionen, wie sie sich in den Gl. 5 und 6 darstellen:

$$KOH \rightleftarrows K^+ + OH^- \qquad \text{Gl. 2}$$

$$HOC{=}OR + KOH \rightleftarrows H_2O + KO\,C{=}OR \qquad \text{Gl. 3}$$

$$CH_3OK + H_2O \rightleftarrows CH_3OH{=}OR + KOH \qquad \text{Gl. 4}$$

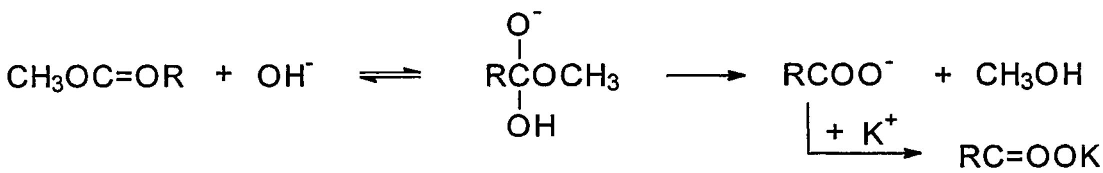

Gl. 5

$$CH_3OC{=}OR + H_2O \rightleftarrows HOC{=}OR + CH_3OH \qquad \text{Gl. 6}$$

Die Katalysatorherstellung erfolgt unter Wasserentzug nach folgenden Reaktionen:

$$CH_3OH + KOH \rightleftarrows CH_3OK + H_2O \qquad \text{Gl. 7}$$

$$CaC_2 + 2\,H_2O \rightleftarrows Ca(OH)_2 + C_2H_2 \qquad \text{Gl 8}$$

Zu den Phasenvermittlern gehören sowohl die im Rapsölrohstoff vorhandenen als auch die gemäß Gl. 6 als Folgereaktion im Prozessverlauf sich bildenden freien Fettsäuren. Ferner muss man das in den Prozess eingeschleppte Wasser sowohl aus dem Rapsöl als auch aus dem Katalysatorprozess gemäß Gl. 7 und die sich daraus in den unerwünschten Nebenreaktionen bildenden Seifen oder freien Fettsäuren gemäß Gl. 2 - 6 als Ursache zur Bildung von Phasenvermittlern ansehen. Deshalb wird das bei der Katalysatorherstellung gebildete Wasser in einem an sich bekannten, aber in technischen Biodieselprozessen bisher nicht angewendeten Trocknungsprozess mit Calciumcarbid

oder Calciumoxid unter Bildung von Calciumhydroxid beseitigt. Durch den dem Umesterungsprozess vorgeschalteten Waschprozess werden hydrophile Stoffe wie Phospholipide und freie Fettsäuren aus dem Rapsöl entfernt. Damit reduziert sich zugleich der Katalysatoreinsatz auf ein Minimum. Optimal für den Umsatz, die Glycerinreinheit und den Kaliumgehalt in der Biodieselphase scheint eine Katalysatormenge von g(KOH)/kg Öl = 2,5 + SZ zu sein. Schließlich wird durch minimale Verweilzeiten infolge Mikroreaktorfahrweise die Wahrscheinlichkeit für die Folgereaktionen gemäß Gl. 5-6 reduziert.

Tabelle 1: Leistungsparameter bei 1-stufiger Fahrweise

| Z.-Nr. | Pr.-Nr. | SZ | Vorbehandlung )1 | Katalysator in g/kg Öl u. 180 g MeOH | Umsatz in % | $\eta^{40}$ in c St | Kalium in ppm | Glycerin in % |
|---|---|---|---|---|---|---|---|---|
| 2 | 13/02 | <0,1 | g gt | 10,0 | > 89,9 | 4,4 | 3,2 | 45,0 |
| 3 | A4 | <0,1 | g gt | 4,0 | 92,9 | 5,0 | 3,8 | 80,0 |
| 4 | 16/2 | 1,4 | ugw gt | 10,0 | > 85,0 | 4,3 | | 43,4 |
| 5 | 17/2 | 1,4 | ugw gt | 10,0 | > 89,0 | 4,5 | | 55,6 |
| 6 | A10/02 | <0,1 | g gt | 2,6 | > 88,0<br>> 98,0 | 4,8 1. Stufe<br>4,5 2. Stufe | 14,2 | 80,5 |
| 7 | A9/2 | <0,1 | g ugt | 9,5 | > 88,0 | 4,7 | | |
| 8 | A11/02 | 1,4 | ugw gt | 3,9 | > 88,0 | 4,7 | | 73,7 |
| 9 | A24 | 1,4 | ugw ugt | 3,9 | > 86,5 | 5,0 | | |
| 10 | A1/02 | <0,1 | g ugt | 2,1 | > 76,0 | | 72 | 91,0 |
| 11 | A27/02 | <0,1 | g ugt | 3,1 | 88,0 | 4,6 | 22 | 62,9 |
| 12 | A27a/02 | <0,1 | g gt | 3,1 | 89,0 | 4,5 | | 63,0 |

)1 g gewaschen, ugw ungewaschen, gt getocknet, ugt ungetrocknet

Überraschenderweise ist die Auswaschung der dispergierend wirkenden Verunreinigungen in der Vorwaschstufe so hoch, dass in Verbindung mit dem Einsatz eines wasserfreien Methanol/Katalysatorgemisches die Seifenstockbildung stark unterdrückt wird. Es werden bei einstufiger Umsetzung lediglich 3,2 - 3,8 ppm Kalium im Biodiesel nachgewiesen (Tab. 1, Fahrt 13/02 und A4 in Zeile 2 und 3). Das heißt, das Waschen des Finalproduktes Biodiesel kann entfallen oder reduziert sich im Routinebetrieb auf eine Wäsche mit Wasser, da die DIN 51 606-Norm Kalium-Werte bis zu 5 ppm gestattet. Damit verbunden tritt auch eine Spontantrennung des gebildeten Biodiesel-Glycerin-Gemisches auf. Durch den Wegfall bzw. die Vereinfachung der Produktwäschen verringert sich der Verfahrensaufwand, sowohl was die Installation einer entsprechenden Apparatetechnik als auch die Vereinfachung der Verfahrenstechnologie anbetrifft, erheblich. Außerdem sinkt der Bedienungsaufwand. Biodiesel wird ungewaschen mit einem Kaliumgehalt von ca. 20 ppm und darunter, Rohglycerin mit einem Glyceringehalt von ca. 80 % erzeugt. Bedingt durch den Wegfall der Aufarbeitungsstufen für die Biodieselphase eignet sich das Verfahren zur bevorzugten Anwendung im ländlichen Raum für die dezentrale Verarbeitung von kleinen Ölmengen M im Bereich von 0,050 < M < 1kt/a.

Verringert man den Katalysatoreinsatz unter 3 g/kg Rapsöl, tritt bei nur unwesentlicher Absenkung des Umsatzes eine wesentliche Erhöhung der Glycerinreinheit von sonst üblicherweise ca. 50 % auf ca. 80 - 90% ohne Einsatz einer physikalischen oder chemischen Nachreinigung auf (Tab. 1, Spalte 8). Ein weiterer positiver Effekt ist, dass überraschender Weise der Umsetzungsgrad in vorgewaschenen Ölen unabhängig von der eingesetzten Katalysatormenge ist. Wie die Beispiele in Zeile 6 und 7 der Tabelle 1 zeigen, erhält man etwa den gleichen Umsetzungsgrad auch bei 3 bis 4 - fach niedrigerem Katalysatoreinsatz. Erst bei KOH-Mengen unter 2,6 g/kg Öl ist ein merklicher Umsatzabfall zu beobachten (Tab. 1 Fahrt A1/02 in Zeile 10). Mithin kann man mit der angegeben Verfahrenstechnologie Katalysator

einsparen.

Ein weiterer überraschend positiver Einfluss der Waschung wirkt sich auf die Katalysatorpräparation aus. Für Öle mit Säurezahlen SZ $\leq$ 0,1 bringt ein wasserfreier Katalysator keinen wesentlichen positiven Effekt mehr (Tab. 1 Fahrten A27/02 und A27a/02 in Zeile 12 und 13). Er ist dagegen jedoch bei Ölen mit Säurezahlen um SZ = 1,4 deutlich am Umsatz und an der Viskosität nachweisbar (Tab. 1, Fahrten A11/02 und A 24 in Zeile 8 und 9).

Setzt man zur Unterstützung der Phasentrennung sowohl bei den Waschungen als auch bei der Umesterung Koaleszenzhilfen, wie z. B. feinmaschige Edelstahldrahtnetze oder Glasvlies ein, lässt sich die Ausbeute pro Zeiteinheit deutlich erhöhen.

Schließlich hat sich gezeigt, dass bei dem erfindungsgemäßen Prozess die wertvollen Ingredenzien der Ölpflanze, wie z. B. das $\alpha$- und $\delta$-Tocopherol, sich in der Methanolphase in einer Weise anreichern, dass sie problemlos ausgewaschen werden können.

Aus all diesen Befunden ergibt sich für die technische Durchführung des Biodieselprozesses in Kleinstanlagen folgende Strategie. Das gewaschene Öl wird in einer 2-stufigen Anlage mit einer KOH-Menge von g(KOH) = 2,5 + SZ in 180 g Methanol pro 1 kg Öl umgesetzt. Der Katalysator muss für Säurezahlen SZ $\leq$ 0,1 nicht notwendiger Weise vorgetrocknet werden (Tab. 1 grau unterlegte Zeile). Die Vorwaschstufe kann dieser Umesterungsanlage vorgeschaltet werden. Alternativ dazu kann die Umesterungsanlage selbst auch zur Vorwaschung eingesetzt werden.

Weitere Vorteile und vorteilhafte Ausgestaltungen der Erfindung sind der nachfolgenden Beschreibung, der Zeichnung und den Ansprüchen entnehmebar.

<u>Zeichnung</u>

Nachfolgend soll die Erfindung an einem Beispiel näher erläutert werden. Die zugehörige Zeichnung zeigt einen Gerätemodul zur Waschung bzw. Umesterung.

Die technische Durchführung der Waschung bzw. Umesterung kann in einem mehrstufigen Gerätemodul gem. Fig 1 nach folgendem Schema erfolgen:

In einen Statikmischer 1 werden die Eingangsstoffe a und b eingegeben. Das entstandene Gemisch passiert einen Nachrekator 2 und einen Koaleszenzfilter 3.

$$a = \begin{cases} \textit{Rapsöl} \\ \textit{Methylester – / Glycidestergemisch} \end{cases}, \textit{falls} \begin{matrix} \textit{Methanolwäsche} \\ \textit{Umesterung} \end{matrix}$$

$$b = \begin{cases} \textit{Methanol} & \textit{Methanolwäsche} \\ \textit{Methanol / Kaliummethanolat}, \textit{falls} & \textit{Umesterung} \\ \textit{Wasser} & \textit{Biodieselwäsche} \end{cases}$$

Die Endprodukte c und d werden aus einem Absetzer 4 abgezogen.

$$c = \begin{cases} \textit{gewaschenesÖl} & \textit{Methanolwäsche} \\ \textit{Glycerinphase}, \textit{falls} & \textit{Umesterung} \\ \textit{Waschwasser} & \textit{Biodieselwäsche} \end{cases}$$

$$d = \begin{cases} \textit{Methanolextrakt} & \textit{Methanolwäsche} \\ \textit{Biodiesel} & \textit{, falls Biodieselwäsche} \\ \textit{Methylester – / Glycidestergemisch} & \textit{Umesterung} \end{cases}$$

Aus dem obigen Schema ist die Vielfältigkeit der Variationsmöglichkeiten sowohl der Eingangsstoffe a und b als auch der unterschiedlichen Prozesse in ein und demselben Gerätemodul ersichtlich.

Nachfolgend ist die Erfindung am Beispiel einer Versuchsdurchführung dargestellt:

**A** Auswaschung des Rohöls

**A1** 100 g Rapsöl mit der Säurezahl SZ = 1,4 werden mit 30 g Methanol bei 65°C mittels Mikroreaktor gewaschen. Nach Abtrennung der Methanolphase und Abziehen des Methanols beträgt die Säurezahl der Ölphase 1,0; es werden ca. 200 mg Fettsäure ausgewaschen.

**A2** 100 g Leinöl mit der Säurezahl SZ = 2,5 werden mit 30 g Methanol bei 65°C mittels Mikroreaktor gewaschen. Nach Abtrennung der Methanolphase und Abziehen des Methanols beträgt die Säurezahl der Ölphase 1,38; es werden ca. 560 mg Fettsäure ausgewaschen.

**A3** 100 g frisch ausgepresstes Rapskernöl mit der Säurezahl SZ = 0,5 werden mit 30 g Methanol bei 65°C mittels Mikroreaktor gewaschen. Nach Abtrennung der Methanolphase und Abziehen des Methanols beträgt die Säurezahl der Ölphase SZ < 0,1.

**B** Analyse der Waschstufen

In der mit Methanol gewaschenen Ölfraktion tritt eine Abreicherung des wichtigsten Tocopherols , des α-Tocopherols, von ursprünglich 182 ppm auf ca. 37 ppm auf. Es reichert sich mit dem δ-Tocopherol in der Methanolphase an. Das β-Tocopherol verbleibt im Öl und geht in die Biodieselphase. Das δ-Tocopherol reichert sich in der Glycerinphase an.

**C** Katalysatorherstellung

1 Mol Methanol werden mit 1 Mol KOH umgesetzt. Zur Lösung wird ½ Mol Calciumcarbid zugegeben und bis zur Beendigung der Gasbildung gerührt. Bei Verwendung von CaO als Wasserbindemittel sind 1 Mol CaO einzusetzen. Die Reaktion mit CaO ist in der Siedehitze ca. 2 h auszuführen.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Verfahren zur kontinuierlichen Herstellung von Biomethanoldiesel aus Raps- bzw. Rapskernöl in kleineren Mengen durch Umesterung in einer Mikroreaktorkaskade unter Einsatz von Katalysatoren,
**dadurch gekennzeichnet,**
**dass** die frisch gepressten Öle vor dem eigentlichen Umesterungsprozess mit Methanol in der Mikroreaktorkaskade zweimal gewaschen und dabei Säurezahlen SZ ≤ 0,1 erreicht werden.

2. Verfahren nach Anspruch 1,
**gekennzeichnet dadurch**
**dass** durch den Waschprozess bedingt mit relativ geringen Katalysatormengen gearbeitet wird, die sich in Abhängigkeit von der Säurezahl des Öles zu

$$g(KOH)/kg\ (\ddot{O}l) = 2{,}5 + SZ$$

ergeben und bei SZ ≤ 0,1 der Katalysator nicht notwendigerweise wasserfrei gemacht wird.

**3.** Verfahren nach Anspruch 1 und 2,
**gekennzeichnet dadurch,**
**dass** die Phasentrennung sowohl bei den Waschungen als auch bei der Umesterung durch Koaleszenzhilfen, wie z. B. feinmaschige Edelstahldrahtnetze oder Glasvliese, unterstützt wird.

**4.** Verfahren nach Anspruch 1-3,
**gekennzeichnet dadurch,**
**dass** aus der Methanolphase des Waschprozesses u. a. α-Tocopherol gewonnen wird.

## Claims

**1.** A process for continuous production of biomethanol diesel from rapeseed oil [canola oil] in small amounts by transesterification in a micro-reactor cascade using catalysts,
**characterized in that**
freshly pressed oils are washed twice with methanol in the micro-reactor cascade before the actual transesterification process, thereby achieving acid numbers AN ≤ 0.1.

**2.** The process according to Claim 1,
**characterized in that**
due to the washing process, relatively small amounts of catalyst are used, determined as a function of the acid number of the oil as being

$$g(KOH)/kg\ (oil) = 2.5 + AN,$$

whereby at AN ≤ 0.1 the catalyst is not necessarily freed of water.

**3.** The process according to Claims 1 and 2,
**characterized in that**
phase separation in the washing steps and also in the transesterification is supported by coalescence aids, e.g., fine mesh, stainless steel, wire mesh or glass nonwovens.

**4.** The method according to Claims 1 through 3,
**characterized in that**
α-tocopherol, among other substances, is obtained from the methanol phase of the washing process.

## Revendications

**1.** Procédé de production continue de diesel à base de méthanol à partir d'huile de colza ou d'huile de pépins de colza en petites quantités par transestérification dans une cascade de microréacteur en utilisant des catalyseurs,
**caractérisé en ce que**
les huiles venant d'être pressées, avant le procédé de transestérification proprement dit, sont lavées au méthanol dans la cascade de microréacteur et qu'on atteint alors des indices d'acidité SZ ≤ 0,1.

**2.** Procédé selon la revendication 1,
**caractérisé en ce que**,
en raison du procédé de lavage, on travaille avec des quantités de catalyseur relativement faibles qui résultent en fonction de l'indice d'acidité de l'huile à

$$g(KOH)/kg\ (d'huile) = 2,5 + SZ$$

et qu'avec SZ ≤ 0,1, le catalyseur n'est pas rendu obligatoirement exempt d'eau.

**3.** Procédé selon la revendication 1 ou 2,
**caractérisé en ce que**
la séparation de phases est assistée aussi bien lors des lavages que lors de la transestérification par des aides à la coalescence, comme par exemple des filets de fil d'acier inoxydable ou des non-tissés de verre.

**4.** Procédé selon les revendications 1 à 3,
**caractérisé en ce que**,
à partir de la phase méthanol du processus de lavage, on obtient entre autres du α-tocophérol.

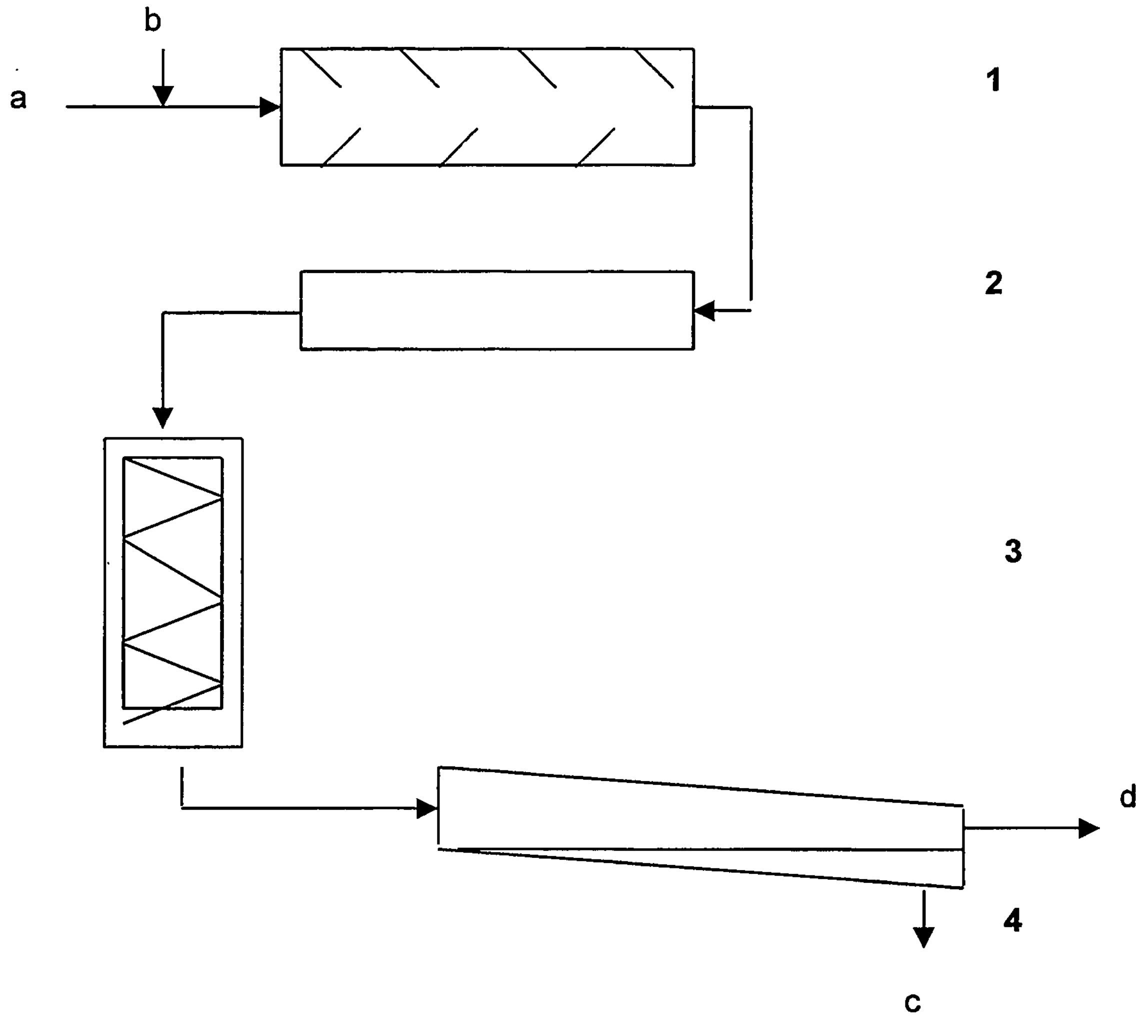
b
a
1
2
3
d
4
c